# EUROPEAN PATENT APPLICATION

(11) **EP 4 796 195 A1**
(43) Date of publication of application: **26.08.2026**
(21) Application number: 24879844.9
(22) Date of filing: 18.10.2024
(51) Int. Cl.: A63F 13/85, A63F 13/53

(54) **PROGRAM, STORAGE MEDIUM, AND INFORMATION PROCESSING DEVICE**

(30) Priority: 19.10.2023 JP 2023180354
(71) Applicant: WOVN TECHNOLOGIES, INC., Tokyo 107-0062 (JP)
(72) Inventor: FUJIMURA Hiroya, Tokyo 107-0062 (JP); TACHIBANA Taiga, Tokyo 107-0062 (JP); TADOKORO Hiroshi, Tokyo 107-0062 (JP)
(74) Representative: Boult Wade Tennant LLP
(86) International application number: PCT/JP2024/037260
(87) International publication number: WO 2025/084424

(57) **Abstract**

The objective of the present invention is to provide a program, a storage medium, and an information processing device with which, in a text translation process for game images, efficient translation work is achieved while providing a uniform game world feeling. This program causes a computer to implement a method for translating/editing translation text included in each game image, the method including: a step, in an electronic terminal device, for reading a game program including translation text data, a management ID of the translation text data, and a game image; a step for associating the read translation text data and game mage with the management ID of the translation text data, and a step for outputting the translation text data and the game image to a game terminal device and the electronic terminal device or to the electronic terminal device.

## Description

### TECHNICAL FIELD

The present disclosure relates to a program, a storage medium, and an information processing device.

### BACKGROUND

The present invention relates to a game image translation program and a game image translation system, as well as a game image translation method for translating text in game images.

In recent years, with the increasing globalization of the game industry, a single game title has come to be played worldwide. For example, even if a game developed in Japan is released to overseas markets as is, if the game content is in Japanese, players who do not understand that language will not be able to properly enjoy the game. Therefore, in order for games to be properly played in different countries and regions, the process called localization is essential.

Game localization not only involves adapting the game content to a specific region or language, but also takes into account the entire gaming experience, including cultural nuances, local customs, and humorous elements in the game. As a result, players in each region can enjoy the game to the fullest.

Game localization is not simply translating a game but involves understanding the game's worldview and rules and conveying them to players from different cultural backgrounds. This makes the game accessible to diverse players, allowing many people worldwide to enjoy the same game.

In addition, in conventional game image text translation process, game companies outsourced text translation, and translators and proofreaders performed translation and editing of the text. Thereafter, it is a common procedure for a game company to incorporate the translated text in the game and conduct quality testing (LQA: Linguistic Quality Assurance) on an actual device, including the translated text being displayed in the actual game images.

### Prior Art Reference

### Patent Documents

Patent Document 1: Japanese Unexamined Patent Application Publication No. 2008-520043

### SUMMARY

### Problems to be solved

In text translation of game images, a translation tool has been proposed that generates grammatically correct text in a target language based on the source language text template and context (for example, Patent Document 1).

However, even if the translation is grammatically correct, because the text in the game is diverse, it may affect the consistency of the translation content and the game's worldview.

Also, communication and coordination with external translators and proofreaders take time and communication costs, which may cause delays or misunderstandings in translation projects. Furthermore, collaboration between internal and external translators of the game company is complicated, making it difficult to maintain consistency and quality of translation content.

### Means for solving the Problems

There is provided a program for causing a computer to execute a method of translating/editing translation text included in each game image, the method including steps of: reading, in an electronic terminal device, a game program including translation text data, a management ID of the translation text data, and a game image; associating the read translation text data and the game image with the management ID; and outputting the translation text data and the game image to a game terminal device and the electronic terminal device, or to the electronic terminal device.

### Effects

Therefore, the present disclosure has been made to solve the above-mentioned problems, and its purpose is to provide a translation program that achieves efficient translation work while maintaining a consistent worldview in the game during the text translation process for game images.

### BRIEF DESCRIPTION OF DRAWINGS

FIG. 1 is a diagram showing an example of an overall configuration of a system according to a first embodiment of the present invention.
FIG. 2 is a block diagram showing a configuration of an electronic terminal device included in the system according to the first embodiment.
FIG. 3 is a block diagram showing an example of a functional configuration of a translation text control unit according to the first embodiment.
FIG. 4 is a flowchart for generating a translation database that associates a management ID with translation text and a game image from game software information in the translation text control unit according to the first embodiment.
FIG. 5A is a diagram showing an example of a data structure of the translation database included in the game software data displayed on the display unit of the electronic terminal device according to the first embodiment.
FIG. 5B is a schematic diagram showing an example of display of text on a game image displayed on the display unit of the game terminal device synchronized with FIG. 5A.
FIG. 5C is a diagram showing an example of the data structure of the translation database in which a synchronization checkbox is checked in FIG. 5A to indicate a synchronized state.
FIG. 5 D is a schematic diagram showing an example of display of text on a game image displayed on the display unit of the game terminal device synchronized with FIG. 5 C.
FIG. 6 is a schematic diagram showing an example in which a game image, a translation database, and an application unit displayed on a display unit of an electronic terminal device according to a second embodiment are displayed on the same display unit.
FIG. 7 is a schematic diagram showing an example in which a game image list requiring translation displayed on a display unit of an electronic terminal device according to a third embodiment is displayed.
FIG. 8 is a schematic diagram showing an example in which a game image and a translation editing field displayed on the display unit of the electronic terminal device when one game image is selected from the game image list of the third embodiment, are displayed.

### DETAILED DESCRIPTION

Hereinafter, embodiments of the present disclosure will be described with reference to the drawings. In all drawings describing the embodiments, common components are denoted by the same reference numerals, and repeated explanations are omitted. Note that the following embodiments do not unduly limit the contents of the present disclosure described in the claims. Furthermore, not all of the components shown in the embodiments are necessarily essential components of the present disclosure. Also, each figure is a schematic diagram and is not necessarily strictly illustrated.

### Overview

An electronic terminal device 200 and a game terminal device 300 according to the present embodiment operate a game translation program in remote communication between a game developer of a game program and a translation editor of another game terminal device. The game translation program according to the present embodiment makes it possible to translate and edit text in a game image including the text, and reflects it immediately in the game image after translation and editing.

### (First embodiment)

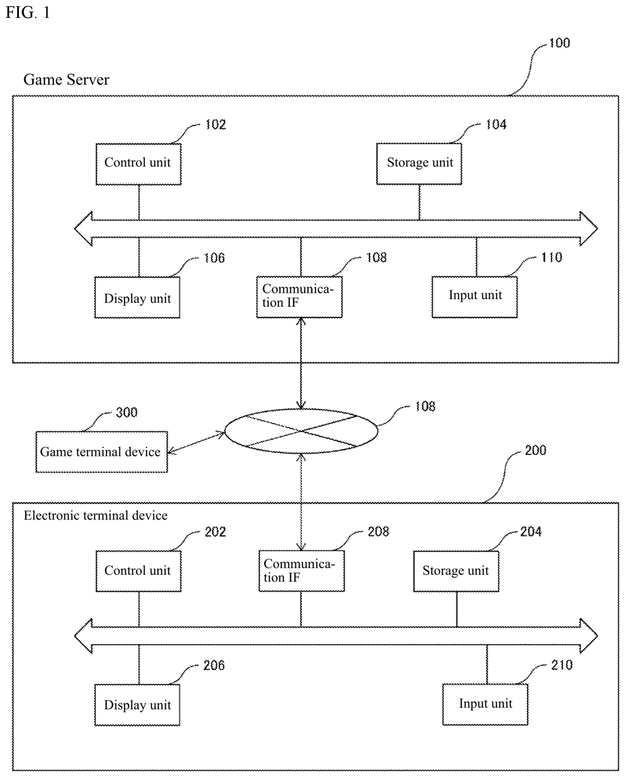

FIG. 1 is a diagram showing an example of an overall configuration of a system according to the first embodiment. As shown in FIG. 1, the system includes a game server 100, an electronic terminal device 200, and a game terminal device 300. The game server 100, the electronic terminal device 200, and the game terminal device 300 are connected to each other in a communicable manner via a network (NW) 80 using wired or wireless communication standards. In one example, the network 80 is realized by the Internet and/or communication networks provided by communication carriers. In the illustrated example, the system includes a plurality of electronic terminal devices 200.

The network is composed of various mobile communication systems constructed by the Internet, LAN, wireless base stations, etc. For example, the network includes 3G, 4G, 5G mobile communication systems, LTE (Long Term Evolution), wireless networks connectable to the Internet via a predetermined access point (for example, Wi-Fi (Registered Trademark)) etc. In the case of wireless connection, communication protocols include, for example, Z-Wave (registered trademark), ZigBee (registered trademark), Bluetooth (registered trademark), and the like. In the case of wired connection, the network also includes those directly connected via USB (Universal Serial Bus) cables or the like.

It is to be noted that FIG. 1 shows a case where the game server 100 is one computer, but the game server 100 may be realized by combining a plurality of computers. Also, FIG. 1 shows a case where the electronic terminal device 200 is one terminal device, but there may be a plurality of the electronic terminal devices 200. Although a case where the game terminal device 300 is one terminal device is shown, there may be a plurality of game terminal devices 300.

The electronic terminal device 200 is a terminal used by a user who utilizes a service provided by the game server 100. For example, the electronic terminal device 200 is a terminal on which a user operates and uses a game of a game program (so-called game software) provided by the game server 100. The electronic terminal device 200 is realized by, for example, a stationary type PC (Personal Computer), a stationary type PC, a head-mounted display or the like. In addition, the electronic terminal device 200 may also be a portable computer such as a smartphone or tablet.

As shown in FIG. 1, the electronic terminal device 200 includes a control unit 202, a storage unit 204, a display unit 206, a communication IF 208, and an input unit 210. The control unit 202, the storage unit 204, the display unit 206, the communication IF 208, and the input unit 210 are, for example, connected to each other in a communicable manner via a bus.

The control unit 202 is hardware for executing an instruction set described in a program, and is composed of an arithmetic unit, a register, peripheral circuits, and the like.

The storage unit 204 temporarily stores programs and data processed by the programs, and is realized, for example, by a volatile memory such as a DRAM (Dynamic Random Access Memory). The storage unit 204 is a so-called storage, which is a storage device for saving data, and is realized, for example, by a flash memory or a HDD (Hard Disc Drive).

The storage unit 204 also includes a storage device for saving data, and is realized, for example, by a flash memory, HDD or the like. The storage unit 204 does not necessarily have to be realized by a single circuit. The storage unit 204 may be realized, for example, by a plurality of memory circuits.

The communication IF 208 is an interface for the electronic terminal device 200 to communicate with an external device and to transmit and receive signals. The input unit 210 is an input device for accepting input operations from users. The input unit 210 includes, for example, a touch panel, a touchpad, a pointing device such as a mouse, and a keyboard, etc. The display unit 206 is an output device for presenting information to users. The display unit 206 includes, for example, a display, a speaker, etc.

The game server 100 is a device that manages information related to a game, refers to the managed information, and provides service. For example, the game server 100 is a computer connected to a network. The game server 100 includes a game program, text data used in the game, a text management ID for the text data, and image information of the game.

The game server 100 includes a control unit 102, a storage unit 104, a display unit 106, a communication IF 108, and an input unit 110. The control unit 102, the storage unit 104, the display unit 106, the communication IF 108, and the input unit 110 are, for example, connected to each other in a communicable manner via a bus.

The control unit 102 is hardware for executing an instruction set described in a program, and is composed of an arithmetic unit, a register, peripheral circuits, and the like. A temporary storage unit temporarily stores programs and data processed by the programs, and is realized, for example, by a volatile memory such as a DRAM.

The storage unit 104 temporarily stores programs and data processed by the programs, and is realized, for example, by a volatile memory such as a DRAM (Dynamic Random Access Memory). The storage unit 104 is a so-called storage, which is a storage device for saving data, and is realized, for example, by a flash memory or a HDD (Hard Disc Drive).

The storage unit 104 also includes a storage device for saving data, and is realized, for example, by a flash memory, HDD or the like. The storage unit 104 does not necessarily have to be realized by a single circuit. The storage unit 104 may be realized, for example, by a plurality of memory circuits.

The communication IF 108 is an interface for the game server 100 to communicate with an external device and to transmit and receive signals. An input/output IF functions as an interface to the input unit 110 for accepting input operations from the user and the display unit 106 for presenting information to the user.

Like the electronic terminal device 200, the game terminal device 300 includes a control unit, a storage unit, a display unit, a communication IF, and an input unit. The control unit, the storage unit, the display unit, the communication IF, and the input unit are, for example, connected to each other in a communicable manner via a bus.

The control unit of the game terminal device 300 is hardware for executing an instruction set described in a program, and is composed of an arithmetic unit, a register, peripheral circuits, and the like.

The storage unit of the game terminal device 300 temporarily stores programs and data processed by the programs, and is realized, for example, by a volatile memory such as a DRAM (Dynamic Random Access Memory). The storage unit of the game terminal device 300 is a so-called storage, which is a storage device for saving data, and is realized, for example, by a flash memory or a HDD (Hard Disc Drive).

The storage unit of the game terminal device 300 also includes a storage device for saving data, and is realized, for example, by a flash memory, a HDD or the like. The storage unit does not necessarily have to be realized by a single circuit. The storage unit may be realized, for example, by a plurality of memory circuits.

The communication IF of the game terminal device 300 is an interface for the game terminal device to communicate with an external device and to transmit and receive signals. The input unit of the game terminal device is an input device for accepting input operations from users. The input unit includes, for example, a touch panel, a touchpad, a pointing device such as a mouse, and a keyboard, etc. The display unit of the game terminal device is an output device for presenting information to users. The display unit includes, for example, a display, a speaker, etc.

### 1.1 Configuration of an Electronic Terminal Device 200

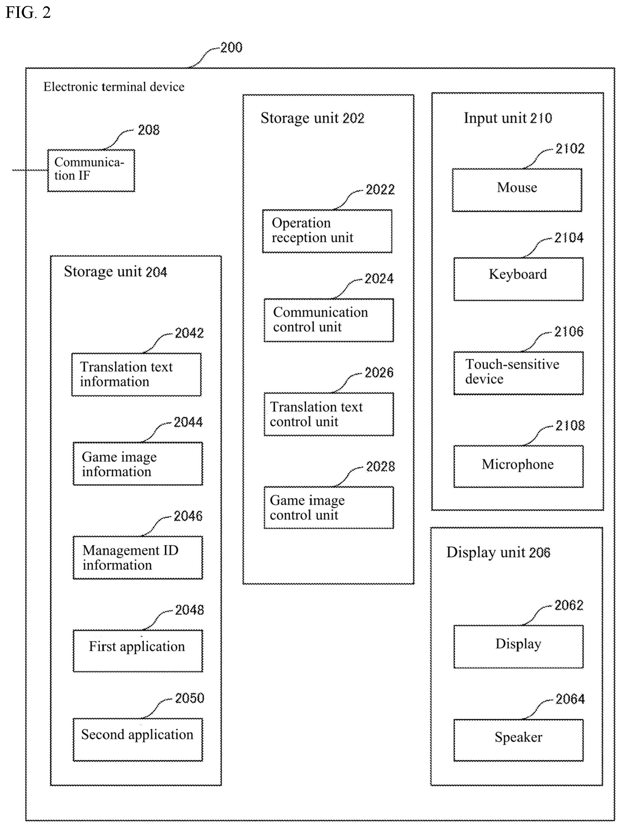

FIG. 2 is a block diagram showing the configuration of the electronic terminal device 200 included in the system of the present embodiment. As shown in FIG. 2, the electronic terminal device 200 includes a communication IF 208, an input unit 210, a display unit 206, a storage unit 204, and a control unit 202.

The communication IF 208 performs processing for the electronic terminal device 200 to communicate with other devices. The communication IF 208 performs transmission processing on signals generated by the control unit 202 and transmits them to an external device (for example, the game server 100, the game terminal device 300). The communication IF 208 applies reception processing to signals received from the external device and outputs them to the control unit 202.

The input unit 210 is a device for a user owning the electronic terminal device 200 to input instructions. The input unit 210 is realized by, for example, a mouse 2102, a keyboard 2104, and a touch-sensitive device 2106 where instructions are input by touching the operation surface. The input unit 210 is also realized by a microphone 2108. The input unit 210 converts instructions or voice input from the user into electric signals and outputs the electric signals to the control unit 202. It is to be noted that the input unit 210 is not limited to physical operation devices such as the mouse 2102 and the keyboard 2104. The input unit 210 may include, for example, a receiving port that receives electric signals input from an external input device.

The display unit 206 is a device for presenting information to the user owning the electronic terminal device 200. The display unit 206 is realized by, for example, a display 2062, a speaker 2064, etc. The display 2062 displays data such as images, videos, and text according to the control of the control unit 202. The display 2062 is realized by, for example, an LCD (Liquid Crystal Display), or an organic EL (Electro-Luminescence) display, etc. The speaker 2064 outputs sound according to the control of the control unit 202.

The storage unit 204 is realized by, for example, a temporary storage unit and a long-term storage unit, and stores data and programs used by the electronic terminal device 200. Specifically, the storage unit 204 stores, for example, a first application 2048, management ID information 2046, translation text information 2042, and game image information 2044. The first application 2048 is an application for remote communication with another terminal to achieve data synchronization between terminals. The management ID information 2046 corresponds to a specific management ID and its corresponding translation text information 2042 and game image information 2044. The management ID information 2046 is information including information that specifies a visual display of text within a game image. The translation text information 2042 is a phrase in a first language before translation and a phrase in at least a second language after translation. In addition, the game image information 2044 is an image used in the game.

The management ID information 2046 is information that specifies the visual display of text in game images, and includes, as one example, the following information: an x coordinate, an origin position of the x coordinate, a y coordinate, an origin position of the y coordinate, a width, a height, a font name, a font size, a scaling degree, presence or absence of support for rich text format, horizontal position specification (such as center alignment), vertical position specification, character spacing width, line spacing height, presence or absence of automatic line breaks, a rotation position on each of the x, y, and z axes in the game image, a minimum font size, a maximum font size, etc., of the text in the game image.

The control unit 202 is realized by reading a program stored in the storage unit 204 and executing instructions included in the program. The control unit 202 controls the operation of the electronic terminal device 200. Specifically, for example, the control unit 202 functions as an operation reception unit 2022, a communication control unit 2024, a translation text control unit 2026, and a game image control unit 2028.

The operation reception unit 2022 receives and processes user operations input from the input unit 210.

The communication control unit 2024 performs processing for the electronic terminal device 200 to communicate with other game terminal devices 300 operated via remote communication in accordance with a communication protocol. The communication control unit 2024 is realized, for example, by the first application 2048 being executed by the control unit 202 (processor). For example, it transmits data based on voice input from a microphone 2108 to another game server 100 and game terminal device 300 that communicate via remote communication. In addition, the communication control unit 2024 receives data transmitted from other game server 100 and game terminal device 300, converts it into voice, and outputs it from a speaker 2064.

In addition, the communication control unit 2024 transmits text data input from, for example, the keyboard 2104, the touch-sensitive device 2106 or the like to another game server 100 and game terminal device 300 that communicate via remote communication. In addition, the communication control unit 2024 receives data transmitted from the other game server 100 and game terminal device 300, converts it into text data, and outputs it from the display 2062.

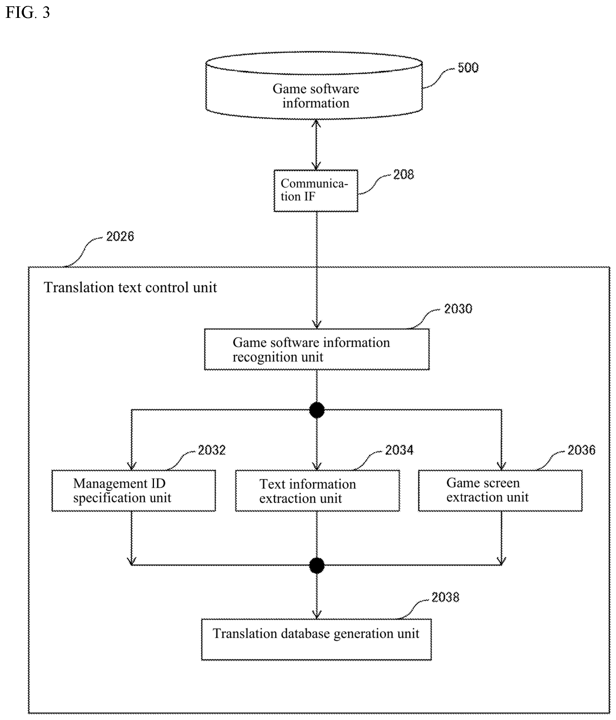

The translation text control unit 2026 performs the processing to analyze the management ID information, text information and game image information included in the game program, and to provide the extraction based on the analysis results to the user. The translation text control unit 2026 is realized, for example, by the second application 2050 being executed by the control unit (processor). Specifically, the translation text control unit 2026 executes the processing shown in FIG.3, for example.

### 2. Operation

The operation of the translation text control unit 283 when remote communication is performed by the translator/proofreader will be described.

FIG. 3 is a block diagram showing an example of a functional configuration of a translation text control unit 2026. The translation text control unit 2026 shown in FIG. 3 has a game software information recognition unit 2030, a game image extraction unit 2036, a text information extraction unit 2034, a management ID specification unit 2032, and a translation database generation unit 2038.

The game software information recognition unit 2030 reads game software data. The approach of game data recognition is a game text translation editing program that operates in cooperation with existing game development engines.

The game image extraction unit 2036 extracts game images included in the game software data. Specifically, the game image extraction unit 2036 outputs only the game images from the game software data, for example.

The text information extraction unit 2034 extracts text included in the game software data. Specifically, the text information extraction unit 2034 includes, for example, language information of the text displayed on images within the game software and information specifying the visual display of text in game images.

The information specifying the visual display of the text includes, as one example, the following information: in the game image, an x coordinate, an origin position of the x coordinate, a y coordinate, an origin position of the y coordinate, a width, a height, a font name, a font size, a scaling degree, presence or absence of support for rich text format, horizontal position specification (such as center alignment), vertical position specification, character spacing width, line spacing height, presence or absence of automatic line breaks, a rotation position on each of the x, y, and z axes in the game image, a minimum font size, a maximum font size, and the like.

The management ID specification unit 2032 identifies and assigns a management ID to each of the text information extracted from the text information extraction unit 2034 and the corresponding game image of the game image extraction unit 2036.

The translation database generation unit 2038 generates a text list table for translation. Specifically, for example, the translation database generation unit 2038 generates a list table in which management ID, text information (language before translation, language after translation), and game image information are associated with each other, so that the translator/proofreader can easily perform translation and editing.

The game image control unit 2028 controls the display unit 206 to present various pieces of information to the translator/proofreader. Specifically, for example, the game image control unit 2028 displays the text list table generated by the translation text control unit 2026 on the display 2062. In addition, the display unit 206 displays the text information (language before translation, language after translation) generated by the translation text control unit 2026 on the image of the game terminal device 300.

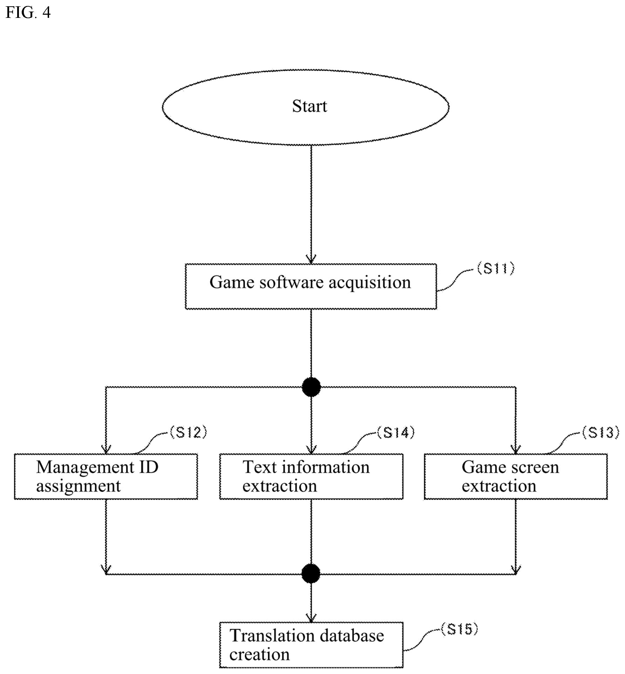

FIG. 4 is a flowchart for generating a translation database that associates a management ID with translation text and a game image from game software information in the translation text control unit 2026.

The translation text control unit 2026 acquires game software data (including text information and game images) by the game software information recognition unit 2030 in response to a read start signal sent from the electronic terminal device 200 to the game server 100 (step S11). The game software information recognition unit 2030 reads the game software data 500 in response to the read start signal.

The translation text control unit 2026 performs, in parallel, the management ID assignment processing by the management ID specification unit 2032, the text information extraction processing of the text information extraction unit 2034, and the game image information processing of the game image extraction unit 2036 on the game software data 500.

The translation text control unit 2026 extracts the text information included in the game data by the text information extraction unit 2034 (step S12). Specifically, the text information extraction unit 2034 outputs text information to be translated based on, for example, the input game software data.

The translation text control unit 2026 extracts game image information including text included in the game data by the game image extraction unit 2036 (step S13). Specifically, the game image extraction unit 2036 outputs game image information related to the translation object, for example, based on the input game software data.

The game software information recognition unit 2030 assigns the management ID to text in the game image based on the result of analyzing the game data (step S14). Specifically, the game software information recognition unit 2030 determines the assignment of management ID to the text information extracted by the text information extraction unit 2034, for example. The management ID assigned by the management ID specification unit 2032 is, for example, information that specifies text information and a visual display of that text in the game image, and includes, as one example, the following information. The information includes: an x coordinate in the game image, an origin position of the x coordinate, a y coordinate, an origin position of the y coordinate, a width, a height, a font name, a font size, a scaling degree, presence or absence of support for rich text format, horizontal position specification (such as center alignment), vertical position specification, character spacing width, line spacing height, presence or absence of automatic line breaks, a rotation position on each of the x, y, and z axes in the game image, a minimum font size, a maximum font size, and the like. The management ID specification unit 2032 terminates processing of the read start signal when, for example, it determines that the text information is not a translation proofreading object in the game and that a management ID is not required.

The translation text control unit 2026 links and associates the management ID created in (step S14), text information data (step S12), and the corresponding game image information in (step S13) and creates them as a translation database (list table) (step S15).

The game image control unit 2028 displays the generated translation database on the display 2062 of the display unit 206 when the translation database is generated by the translation text control unit 2026.

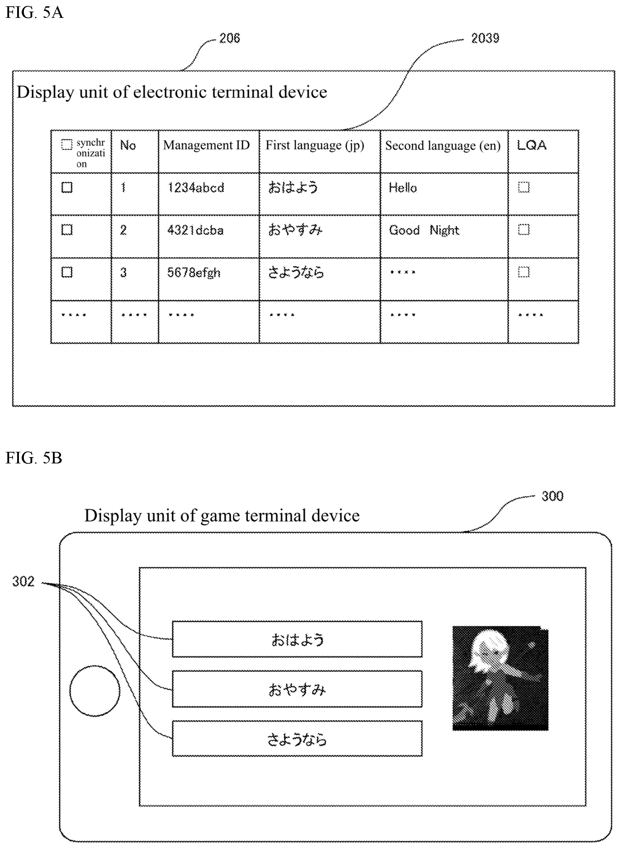

FIG. 5A is a schematic diagram showing an example of the data structure of the translation database included in the game software data displayed on the display unit of the electronic terminal device. FIG. 5B is the game image 2070 where the translation text of FIG. 5A is synchronized.

The control unit of the electronic terminal device 200 and the control unit of the game terminal device 300 exchange data through their respective communication IFs. For example, image information or operation information of a certain game is transmitted from the control unit of the electronic terminal device to the control unit of the game terminal device. The control unit of the game terminal device updates the game images based on the received information. As a result, new image information is displayed on the display unit of the game terminal device. At the same time, the control unit of the electronic terminal device also updates the display unit of the electronic terminal device based on the received information. In this way, the screens of the display units of the electronic terminal device and the game terminal device are synchronously displayed.

As shown in FIG. 5A, the translation database 2039 includes a synchronization button, a management ID, and set languages (first language, second language). A checkbox for executing synchronization is provided. The synchronization checkbox is checked when displaying the second language of the electronic terminal device on the game terminal device. The management ID is a management ID for identifying text and game image information during the game. The set language refers to the language set to be displayed during the game and one or more languages can be set.

In an example shown in FIG. 5A, in the case of "jp", Japanese is indicated, and in the case of "en", English is indicated. In FIG. 5A, only the first language and the second language are shown, but columns corresponding to a third language and subsequent languages are included. Also, for each of the management IDs, a checkbox is provided to confirm the implementation of LAQ (Localization Quality Assurance) checks. LAQ is a quality test of the translation texts implemented in the game conducted on the actual machine.

According to the example shown in FIG. 5A, after the game software data 500 is read by the electronic terminal device 200, the management ID, the set languages (the first language ("jp") and the second language ("en")), and the checkbox of LAQ are displayed as the translation database.

According to the example shown in FIG. 5B, when a portion of any one of the management ID of the translation database, the set languages (the first language ("jp") and the second language ("en")) displayed on the display unit 206 of the electronic terminal device 200 output in FIG. 5A is selected, a game image corresponding thereto is displayed on the game terminal device 300.

According to the example shown in FIG. 5A and FIG. 5B, the electronic terminal device 200 and the game terminal device 300 are synchronized in real time, and when a language obtained by translating the first language is input into a text portion of the second language of the electronic terminal device 200, it is reflected in the text portion on the image of the game terminal device 300. For example, although FIG. 5A and FIG. 5B are synchronized, since none of the synchronization checkboxes have been checked yet, the display text of FIG. 5B corresponding to No.1 management ID "1234abcd" of the translation database of FIG. 5A remains as the first language " 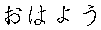 ". The timing of synchronization between the electronic terminal device 200 and the game terminal device 300 can be arbitrarily set manually or automatically.

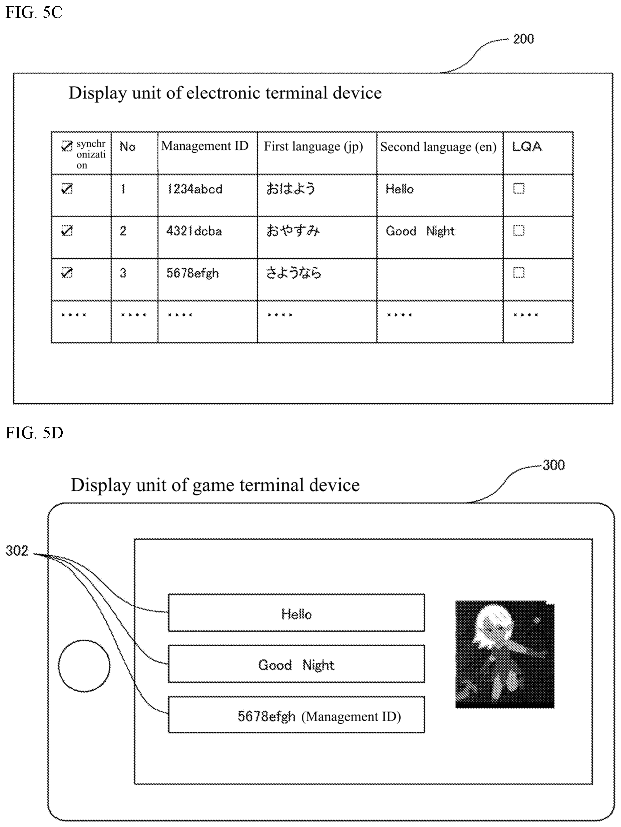

FIG. 5C and FIG. 5D correspond to FIG. 5A and FIG. 5B, and when the top synchronization checkbox in FIG. 5A is checked, all the checkboxes in the synchronization column are checked. Synchronization means that the first language ("jp") of the set languages is replaced with the second language ("en").

In FIG. 5C, all the checkboxes in the synchronization field are checked, and the management IDs "1234abcd", "4321dcba", and "5678efgh" from the top are synchronized with the game terminal device in FIG. 5D, and their respective first languages are replaced with the second language. Specifically, the first language " 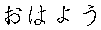 " of the management ID "1234abcd" in FIG. 5D is changed to the second language "Hello", the first language " 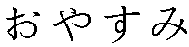 " of the management ID "4321dcba" is changed to the second language "Good Night", and for the first language " 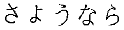 " of the management ID "5678efgh", since the second language is "blank (no input)", the management ID "5678efgh" is displayed. During synchronization, if the second language field is blank, the management ID is displayed. However, when text is input in the second language "blank (no input)", since the synchronization checkbox has been checked, it can be confirmed that the input content is immediately reflected in the game terminal device.

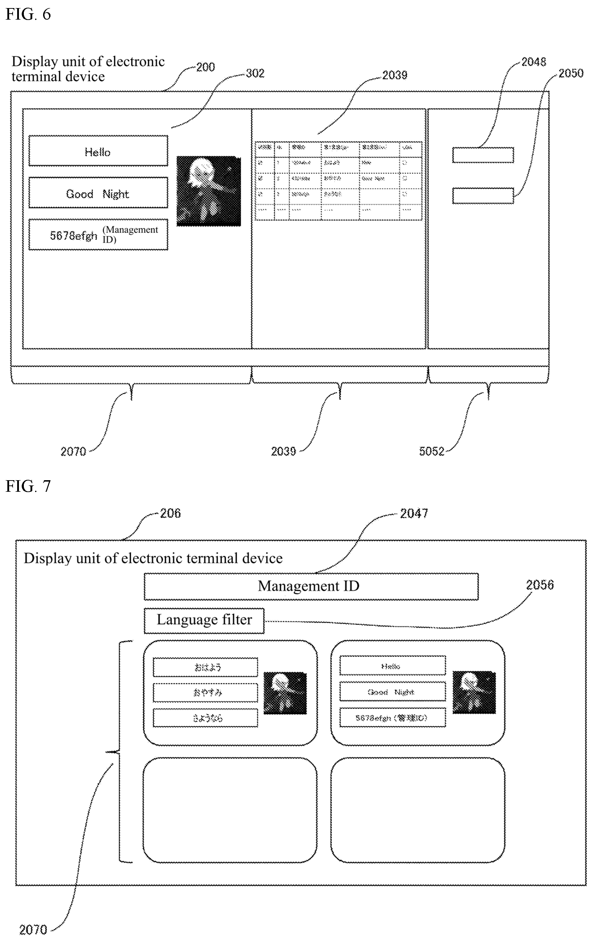

According to the example shown in FIG. 6, it is a schematic diagram showing an example where the game image 2070, the translation database 2039 and the application unit displayed on the display unit 206 of the electronic terminal device 200 are displayed on the same display 2062.

According to the example shown in FIG. 6, even when there is no game terminal device 300, since the game image and the translation database are on the same image, it is possible to perform translation/proofreading work while checking the translation/proofreading results on the game image.

According to the example shown in FIG. 7, it is a schematic diagram showing an example in which a game image list requiring translation is displayed on the display unit 206 of the electronic terminal device 200 of a third embodiment. In the blank field, the game image is omitted.

According to the example shown in FIG. 7, the text to be translated can be easily found from the game image 2070. Thus, even for game image information that can only be reached by performing complex operations, the translation text can be quickly found, thereby not only improving the efficiency of translation/proofreading and LQA, but also facilitating translations that are consistent with the context.

According to the example shown in FIG. 7, a management ID input unit 2047 is included, and when a management ID is input into the management ID input unit 2047, one or more game images 2070 corresponding to the management ID will be hit and displayed.

According to the example shown in FIG. 7, a language filter 2056 allows selection of the language of the displayed translation text. For example, the language filter has selection fields for "All Languages" (a first language before translation and a second language after translation), "Japanese" (the first language), "English" (the second language), and when any of these is selected, game images 2070 displaying the selected language can be shown on the display unit 206.

The language filter 2056 has, for example, three options: "All Languages", "Japanese", and "English". At this time, game images 2070 corresponding to the selected language option will be displayed on the display unit of the electronic terminal device 200.

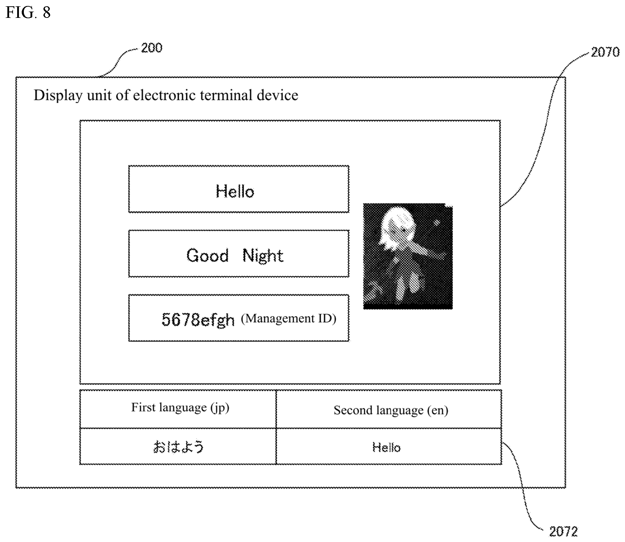

According to the example shown in FIG. 8, it is a schematic diagram showing that a game image 2070 and a translation text input unit 2072 displayed on the display unit of the electronic terminal device when one game image in the game image list of the third embodiment is selected.

According to the example shown in FIG. 8, it is a diagram showing a display of the display unit 206 of the electronic terminal device 200, which is displayed when information of one game image is selected from the list of game images 2070 displayed in FIG. 7.

In FIG. 8, on the display, the selected game image information and the text information in that game image are displayed, and in a portion of the outside (surrounding) of the game image on the same display, a translation text input unit 2072, which is a translation proofreading portion where translation proofreading can be performed, and a game image 2070 are displayed. The translation text input unit 2072 is provided with input portions for each of a selection field of the source language (first language) and a selection field of the translation language (second language).

At the text information portion in the game image of FIG. 8, initially, the text in the source language (first language) is displayed within the game image. When the text information portion to be translated is selected from the displayed text, the input fields for the source language (first language) of the selected portion and the translation language (second language) are displayed in the translation editing portion on the display. When the text translated into the translation language (second language) corresponding to the selected source language (first language) is input, it is immediately reflected in the text information of the game image 2070 in real time. Because the translation text can be confirmed immediately on the game image, there is consistency in the game worldview and efficient translation work can be performed.

Above, some embodiments of the present disclosure have been described, but these embodiments can be implemented in various other forms, and various omissions, replacements, and modifications can be made without departing from the spirit of the invention. These embodiments and their variations are included within the scope and spirit of the invention and are also included within the scope equivalent to the invention described in the claims.

### Supplementary Notes

The matters described in the above embodiments are additionally noted below.

### (Note 1)

A program for causing a computer to execute a method of translating/editing translation text included in each game image, the method comprising steps of:
reading, in an electronic terminal device, a game program including translation text data, a management ID of the translation text data, and game images;
associating the read translation text data and the game images with the management ID of the translation text data; and
outputting the translation text data and the game images to a game terminal device and the electronic terminal device, or to the electronic terminal device.

Translation can be additionally corrected directly from the screenshot image on the game playback device. Not only the efficiency of translation and LQA is improved, but also translation in accordance with the context becomes easier.

### (Note 2)

The program according to Note 1, wherein the step of translating/editing the translation text data output to the game images of the game terminal device includes a step of:
translating/editing the translation text data of the electronic terminal device.

### (Note 3)

The program according to Note 1, wherein the step of translating/editing the translation text data output to the game images of the game terminal device includes a step of:
outputting in real time to the game images of the game terminal device in response to an editing operation of the electronic terminal device.

### (Note 4)

The program according to Note 4, wherein the step of translating/editing the translation text data output to the electronic terminal device includes steps of:
enabling editing of an untranslated first language phrase and at least a second language phrase which is translation of the first language phrase in the translation text data; and
outputting a table in which the management ID of the translation text data, the first language phrase, and the second language phrase are associated with each other.

Translation becomes possible simply by associating the first language phrase and the second language phrase and registering them in a parallel translation database. Furthermore, since translation text added or modified in external translation data such as a sheet of Google Sheets undergoing work is reflected in the game, the time required for translation work is reduced and work efficiency is greatly improved.

### (Note 5)

The program according to Note 4, wherein the step of translating/editing the translation text data output to the electronic terminal device includes steps of:
selecting any one of the management ID of the translation text data, the first language phrase, and the second language phrase in the output table; and
outputting a game image corresponding to a selected portion via the management ID to the terminal device and the game terminal device.

### (Note 6)

The program according to Note 4, wherein the step of translating/editing the translation text data output to the electronic terminal device includes a step of:
outputting at least one or more game images corresponding to the management ID when inputting the management ID of the translation text data in a game image search of the electronic terminal device.

Even for game images that cannot be reached without complex operations, translation text can be found immediately. And by displaying the game image in which the text is displayed in the game program and the translated version of that text simultaneously on the game terminal, the efficiency of translation work is improved.

### (Note 7)

A computer-readable storage medium storing the program according to any one of Notes 1 to 6.

### (Note 8)

An information processing device including a computer, wherein
the information processing device causes the computer to
execute reading, in an electronic terminal device, a game program including translation text data, a management ID of the translation text data, and game images;
execute associating the read translation text data and the game images with the management ID of the translation text data; and
output the translation text data and the game images to a game terminal device and the electronic terminal device, or to the electronic terminal device.

### (Note 9)

The information processing device according to Note 8, wherein execution of translating/editing the translation text data output to the game images of the game terminal device includes:
translating/editing the translation text data of the electronic terminal device.

### (Note 10)

The information processing device according to Note 8, wherein execution of translating/editing the translation text data output to the game images of the game terminal device includes:
outputting in real time to the game images of the game terminal device in response to an editing operation of the electronic terminal device.

### (Note 11)

The information processing device according to Note 9, wherein execution of translating/editing the translation text data output to the electronic terminal device includes:
enabling editing of an untranslated first language phrase and at least a second language phrase which is translation of the first language phrase in the translation text data; and
outputting a table in which the management ID of the translation text data, the first language phrase, and the second language phrase are associated with each other.

### (Note 12)

The information processing device according to Note 11, wherein execution of translating/editing the translation text data output to the electronic terminal device includes:
selecting any of the management ID of the translation text data, the first language phrase, and the second language phrase in the output table; and
outputting a game image corresponding to a selected portion via the management ID to the terminal device and the game terminal device.

### (Note 13)

The information processing device according to Note 11, wherein execution of translating/editing the translation text data output to the electronic terminal device includes:
outputting at least one or more game images corresponding to the management ID when inputting the management ID of the translation text data in a game image search of the electronic terminal device.

### EXPLANATION OF REFERENCE SYMBOLS

100: game server
102: control unit
104: storage unit
106: display unit
108: communication IF
110: input unit
200: electronic terminal device
202: control unit
2022: operation reception unit
2024: communication control unit
2026: translation text control unit
2028: game image control unit
2030: game software information recognition unit
2032: management ID specification unit
2034: text information extraction unit
2036: game image extraction unit
2038: translation database generation unit
2039: translation database
204: storage unit
2042: translation text information
2044: game image information
2046: management ID information
2047: management ID input unit
2048: first application
2050: second application
2052: application unit
2056: language filter
206: display unit
2062: display
2064: speaker
2070: game image
2072: translation text input unit
208: communication IF
210: input unit
2102: mouse
2104: keyboard
2106: touch-sensitive device
2108: microphone
300: game terminal device
302: text display unit
500: game software data

## Claims

1. A program for causing a computer to execute a method of translating/editing translation text included in each game image, the method comprising steps of:
reading, in an electronic terminal device, a game program comprising translation text data, a management ID of the translation text data, and game images;
associating the read translation text data and the game images with the management ID of the translation text data; and
outputting the translation text data and the game images to a game terminal device and the electronic terminal device, or to the electronic terminal device.

2. The program according to claim 1, wherein the step of translating/editing the translation text data output to the game images of the game terminal device comprises a step of:
translating/editing the translation text data of the electronic terminal device.

3. The program according to claim 1, wherein the step of translating/editing the translation text data output to the game images of the game terminal device comprises a step of:
outputting in real time to the game images of the game terminal device in response to an editing operation of the electronic terminal device.

4. The program according to claim 2, wherein the step of translating/editing the translation text data output to the electronic terminal device comprises steps of:
enabling editing of an untranslated first language phrase and at least a second language phrase which is translation of the first language phrase in the translation text data; and
outputting a table in which the management ID of the translation text data, the first language phrase, and the second language phrase are associated with each other.

5. The program according to claim 4, wherein the step of translating/editing the translation text data output to the electronic terminal device comprises steps of:
selecting any of the management ID of the translation text data, the first language phrase, and the second language phrase in the output table; and
outputting a game image corresponding to a selected portion via the management ID to the electronic terminal device and the game terminal device.

6. The program according to claim 4, wherein the step of translating/editing the translation text data output to the electronic terminal device comprises a step of:
outputting at least one or more game images corresponding to the management ID when inputting the management ID of the translation text data in a game image search of the electronic terminal device.

7. A computer-readable storage medium storing the program according to any one of claims 1 to 6.

8. An information processing device comprising a computer, wherein
the information processing device causes the computer to
execute reading, in an electronic terminal device, a game program comprising translation text data, a management ID of the translation text data, and game images;
execute associating the read translation text data and the game images with the management ID of the translation text data; and
output the translation text data and the game images to a game terminal device and the electronic terminal device, or to the electronic terminal device.

9. The information processing device according to claim 8, wherein execution of translating/editing the translation text data output to the game images of the game terminal device comprises:
translating/editing the translation text data of the electronic terminal device.

10. The information processing device according to claim 8, wherein execution of translating/editing the translation text data output to the game images of the game terminal device comprises:
outputting in real time to the game images of the game terminal device in response to an editing operation of the electronic terminal device.

11. The information processing device according to claim 9, wherein execution of translating/editing the translation text data output to the electronic terminal device comprises:
enabling editing of an untranslated first language phrase and at least a second language phrase which is translation of the first language phrase in the translation text data; and
outputting a table in which the management ID of the translation text data, the first language phrase, and the second language phrase are associated with each other.

12. The information processing device according to claim 11, wherein execution of translating/editing the translation text data output to the electronic terminal device comprises:
selecting any of the management ID of the translation text data, the first language phrase, and the second language phrase in the output table; and
outputting a game image corresponding to a selected portion via the management ID to the electronic terminal device and the game terminal device.

13. The information processing device according to claim 11, wherein execution of translating/editing the translation text data output to the electronic terminal device comprises:
outputting at least one or more game images corresponding to the management ID when inputting the management ID of the translation text data in a game image search of the electronic terminal device.
